# EUROPÄISCHE PATENTSCHRIFT

(11) **EP 1 506 805 B1**
(45) Veröffentlichungstag und Bekanntmachung des Hinweises auf die Patenterteilung: **28.12.2011**
(21) Anmeldenummer: 04019273.4
(22) Anmeldetag: 13.08.2004
(51) Int. Cl.: B01D 47/06, F24F 3/16

(54) **Luft-Reinigungsvorrichtung**
Air cleaning device
Dispositif de purification d'air

(30) Priorität: 13.08.2003 DE 20312576 U
(43) Veröffentlichungstag der Anmeldung: 16.02.2005
(73) Patentinhaber: Airclean Europe Limited, 35099 Burgwald (DE)
(72) Erfinder: Kowalewski, Klaus, 35099 Burgwald (DE)
(74) Vertreter: Buchhold, Jürgen

(56) Entgegenhaltungen:
- DE-U- 20 302 152
- PATENT ABSTRACTS OF JAPAN -& JP 08 206436 A (AIWA CO LTD), 13. August 1996 (1996-08-13)
- PATENT ABSTRACTS OF JAPAN Bd. 12, Nr. 421, 8. November 1988 (1988-11-08) & JP 63 151328 A (MORI TAKESHI), 23. Juni 1988 (1988-06-23)
- PATENT ABSTRACTS OF JAPAN Bd. 1999, Nr. 13, 30. November 1999 (1999-11-30) & JP 11 207124 A (NEC HOME ELECTRON LTD), 3. August 1999 (1999-08-03)

## Beschreibung

Die Erfindung betrifft eine Luft-Reinigungsvorrichtung gemäß dem Oberbegriff von Anspruch 1.

Bei Sanierungs- oder Renovierungsarbeiten, aber auch bei Schreinerarbeiten, Schleifarbeiten u.dgl. fallen oft große Mengen an Staub und Schmutz an. Dieser verteilt sich gleichmäßig im Raum; selbst durch geschlossene Türen hindurch. Lüften hilft meist wenig, insbesondere in engen oder geschlossenen Räumen. Die Arbeiten müssen daher in stark verunreinigter Umgebungsluft durchgeführt werden. Die gesundheitliche Belastung ist sehr hoch. Die Verwendung von Atemschutzmasken nicht selten hinderlich.

Um dem zu begegnen, hat man Luft-Reinigungsvorrichtungen entwickelt. Diese saugen die staubbeladene Umgebungsluft mit einem Gebläse an und leiten sie durch ein oder mehrere Filterelemente hindurch. Die gereinigte Luft wird anschließend wieder in den Raum abgegeben oder nach außen geleitet. Finden mechanische Filterelemente Verwendung, so sind diese relativ großflächig auszubilden, um eine ausreichende Filterwirkung zu erzielen. Die Gebläseleistung muß entsprechend hoch gewählt werden, um einen ausreichenden Ansaugdruck zu erlangen. Darüber hinaus müssen die Filter regelmäßig gesäubert werden, was aufgrund der erneuten Staubfreisetzung nicht nur arbeitsaufwendig, sondern auf Dauer sehr teuer ist. Nach einiger Zeit müssen die Filterelemente sogar vollständig ausgetauscht werden.

GB 2 187 546 A beschreibt beispielsweise eine Luft-Reinigungsvorrichtung bestehend aus einem vierkantigen Innenrohr und einem dazu beabstandeten vierkantigen Außenrohr. Mittels eines Strömungserzeugers wird ein vertikal nach unten gerichteter Luftstrom im Innenrohr erzeugt. Im Innenrohr wird der Luftstrahl mittels Schläuchen mit Düsen aus unterschiedlichen Richtungen und in unterschiedlichen Höhen mit Wassertropfen durchsetzt. Am unteren Ende des Innenrohrs wird der Luftstrom anschließend umgelenkt und strömt im Zwischenraum zwischen Innen- und Außenrohr wieder nach oben zu einer Auslassöffnung. Das Wasser bleibt dabei am Boden zurück wo der Schmutz gesammelt wird und von wo aus das Wasser erneut den Schläuchen zugeführt werden kann.

Gemäß US 3 444 670 A ragen in den von einem Außenrohr begrenzten Strömungsraum einer Luft-Reinigungsvorrichtung radiale Arme mit jeweils mehreren Sprühdüsen. Hierdurch sollen ebenfalls Schmutzpartikel aus einem Luftstrom gewaschen werden.

Auch GB 2 343 850 A sieht ein Außenrohr vor, in dem mittels eines Strömungserzeugers ein Luftstrom erzeugt wird. Mit Düsen wird Wasser in den Luftstrom gesprüht. Zur Trennung des Schmutzes von der Luft ist weiterhin wenigstens ein Trennelement vorgesehen, insbesondere ein Tropfenabscheider. Letzterer ist als Stahlgewebe ausführbar.

US 1 894 864 A beschreibt eine Luft-Reinigungsvorrichtung zum Entfernen von Staub und Schmutz aus der Umgebungsluft. Die Vorrichtung umfasst ein Gehäuse mit einer Anzahl an Luftschlitzen in seinem oberen Bereich. Am oberen Ende des Gehäuses ist eine Abdeckung angebracht, die mit einer Reihe weiterer Öffnungen ausgestattet ist. Unterhalb der Abdeckung ist ein Gebläse angeordnet, bestehend aus einem Rohr, in dem ein Ventilator angeordnet ist. Das Gebläse saugt die verunreinigte Luft durch die Öffnungen der Abdeckung an und bläst sie durch das untere, offene Ende des Rohres in das Innere des Gehäuses der Reinigungsvorrichtung. Anschließend verlässt die Luft das Gehäuse durch die Luftschlitze. Mithin wird zwischen den Öffnungen und den Luftschlitzen ein Luftstrom erzeugt. Unmittelbar gegenüberliegend zu dem unteren, offenen Ende des Rohres ist ein Filter in Form einer Wasservernebelungseinrichtung angeordnet. Diese sprüht der einströmenden Luft Wasser aus einem unterhalb der Vernebelungseinrichtung gelegenen Reservoir entgegen. Mit Hilfe von vertikalen Leitblechen wird das Wasser dabei über einen möglichst breite radiale zylindrische Fläche verspritzt. Der zwischen den Öffnungen und den Luftschlitzen fließende Luftstrom wird dabei durch den entstehenden Wassernebel geleitet, sodass Staub- und Schmutzpartikel ausgewaschen werden.

US 1 952 269 A offenbart eine Luft-Reinigungsvorrichtung zum Entfernen von Staub und Schmutz aus der Umgebungsluft. Die Vorrichtung umfasst ein Gehäuse mit einem Außenrohr, in dessen oberen Bereich Luftschlitzen eingebracht sind. Am oberen Ende des Gehäuses ist eine Abdeckung angebracht, die mit einer Reihe weiterer Öffnungen ausgestattet ist. Unterhalb der Abdeckung ist ein Gebläse angeordnet, bestehend aus einem Innenrohr, in dem ein Ventilator angeordnet ist. Das Gebläse saugt verunreinigte Luft durch die Öffnungen der Abdeckung an und bläst sie durch Öffnungen am unteren Ende des Rohres in den Zwischenraum zwischen Innenrohr und Außenrohr. Anschließend verlässt die Luft das Gehäuse durch die Luftschlitze. Mithin wird zwischen den Öffnungen und den Luftschlitzen ein Luftstrom erzeugt. Unmittelbar auf Höhe der unteren Öffnungen am Ende des Innenrohres und oberhalb ist ein Filter in Form einer Wasservernebelungseinrichtung angeordnet. Diese sprüht der einströmenden Luft Wasser aus einem unterhalb der Vernebelungseinrichtung gelegenen Reservoir entgegen.

DE-U1-203 02 152 schlägt ein mobiles Luftreinigungsgebläse vor, das die Staub- und Schmutzpartikel mit Hilfe von Wasser aus der Luft auswäscht. Es hat hierzu einen ersten Schacht mit seitlichen Lufteinlaßöffnungen für die verunreinigte Luft und parallel dazu einen zweiten Schacht mit einer Luft-Ausblasöffnung für die gereinigte Luft. In einem Übergangsbereich zwischen dem ersten und dem zweiten Schacht wird mit einem horizontal angeordneten, längsgeschlitzten Rohr ein Wasservorhang erzeugt, um die Staub- und Schmutzpartikel aus der von dem Gebläse angesaugten Luft auszuwaschen. Die gesamte Vorrichtung steht in einer Wasserwanne, aus der das Wasser für die Erzeugung des Wasservorhangs gefördert und in die das verbrauchte Wasser wieder zurückgeleitet wird.

Von Nachteil hierbei ist, daß das Gebläse den Luftstrom durch einen flächigen, relativ dünnen Wasserschleier hindurchdrückt, so daß dieser wie ein Vorhang stellenweise auseinandergeblasen wird. Innerhalb des Luftstroms befindliche Staubpartikel werden daher nicht oder nur unzureichend befeuchtet und damit nicht ausgewaschen. Überdies ist das gesamte Gerät relativ groß und unhandlich. Es besteht aus insgesamt zwei sperrigen Teilen, nämlich einem quaderförmigen Gehäuseteil und einem rechteckigen Aufsatzturm mit den Luft-Ausblasöffnungen. Hinzu kommt die Wasserwanne als Reservoir und Sammelbehältnis für das Flüssigmedium. Alle Teile müssen einzeln transportiert und jedesmal neu zusammengesetzt werden. Der Arbeits- und Montageaufwand ist entsprechend hoch. Der konstruktive Aufwand führt zu relativ hohen Herstellkosten.

Ziel der Erfindung ist es, diese und weitere Nachteile des Standes der Technik zu überwinden und eine Luft-Reinigungsvorrichtung zu entwickeln, die mit einfachen Mitteln kostengünstig aufgebaut ist und dennoch eine hohe Reinigungswirkung erzielt. Sie soll ferner bei kompakten Abmessungen leicht zu handhaben, insbesondere einfach zu transportieren und selbst bei beengten Platzverhältnissen problemlos einsetzbar sein.

Hauptmerkmale der Erfindung sind im kennzeichnenden Teil von Anspruch 1 angegeben. Ausgestaltungen sind Gegenstand der Ansprüche 2 bis 20.

Bei einer Luft-Reinigungsvorrichtung zum Entfernen von Staub und Schmutz aus der Umgebungsluft, mit einem Gehäuse, das eine Ansaugöffnung für die zu reinigende Umgebungsluft und eine Ausblasöffnung für die gereinigte Luft aufweist, mit einem Gebläse, das die verunreinigte Umgebungsluft ansaugt und die gereinigte Luft ausbläst, wobei zwischen der Ansaugöffnung und der Ausblasöffnung ein Luftstrom entsteht, mit einer Filtereinrichtung zum Auswaschen der Verunreinigungen aus der angesaugten Umgebungsluft mittels eines flüssigen Mediums und mit einem Sammelbehältnis für das flüssige Medium, wobei das Gehäuse und das Gebläse koaxial zu einer gemeinsamen Achse angeordnet sind und wobei die Filtereinrichtung abströmseitig hinter dem Gebläse ausgebildet ist und das flüssige Medium zerstäubt in den Luftstrom einbringt, wobei das zerstäubte Medium über die Querschnittsfläche des Gehäuses verteilbar ist und die Haupt-Strömungsrichtung des zerstäubten flüssigen Mediums mit der Strömungsrichtung des Luftstroms zusammenfällt, wobei das Gehäuse ein Außenrohr und zu diesem beabstandet ein Innenrohr aufweist, wobei Außenrohr und Innenrohr über eine seitliche Überströmöffnung verbunden sind, sieht die Erfindung laut Anspruch 1 vor, dass das Gebläse mit seinem Gehäuse dicht an den Innenumfang des Außenrohres anschließt und mit seiner Auslaßöffnung stirnseitig in dem Innenrohr mündet, dass die Filtereinrichtung koaxial zur Achse ausgebildet ist, und dass die Filtereinrichtung abströmseitig hinter dem Gebläse ein Mundstück, eine Düse o.dgl. aufweist, aus der das flüssige Medium entgegen dem Luftstrom austreten kann, wobei zwischen der Auslassöffnung des Gebläses und der Düse eine Prallfläche vorgesehen ist.

Die Unterteilung des Gehäuses in ein Aussenrohr und in ein zu diesem beabstandetes Innenrohr ermöglicht einen ungestörten, linearen Luftstrom. Eine solche Bauweise ist außerdem äußerst robust und bereits in sich stabil, so daß die Vorrichtung selbst dem rauhen Alltagsbetrieb auf Baustellen problemlos standhält. Darüber hinaus kann man die Wandstärke des Gehäuses vergleichsweise dünn wählen, was sich wiederum positiv auf das Gesamtgewicht auswirkt. Die von dem Gebläse angesaugte Umgebungsluft wird ohne Umwege unmittelbar der Filtereinrichtung zugeführt, was sich günstig auf die Strömungsverhältnisse auswirkt. Dementsprechend kann ein Gebläse mit einer relativ geringen Leistungsaufnahme verwendet werden. Sowohl die Herstell- als auch die Betriebskosten sind dadurch äußerst gering. Überdies erzielt die erfindungsgemäße Reinigungsvorrichtung eine hohe Reinigungswirkung, denn die in der angesaugten Umgebungsluft enthaltenen Staub- und Schmutzpartikel werden unmittelbar hinter dem Gebläse von dem flüssigen Medium ausgewaschen. Die Verwendung von zusätzlichen oder ergänzenden Filterelementen entfällt. Ein Filterwechsel ist nicht erforderlich. Desweiteren verhindert das separate Rotorgehäuse und die gemeinsame Haupt-Strömungsrichtung, dass das flüssige Medium in das Gebläse eindringen kann. Dies stellt einen dauerhaft zuverlässigen Betrieb sicher

Zu der äußerst kompakten und handlichen Bauweise der Luft-Reinigungsvorrichtung trägt auch bei, dass die Filtereinrichtung koaxial zur Achse ausgebildet ist. Das flüssige Medium kann nahezu von allen Seiten in den Luftstrom eindringen und die darin mitgeführten Verunreinigungen auswaschen, sodass der Wirkungsgrad der erfindungsgemäßen Vorrichtung trotz der kompakten Bauweise sehr hoch ist.

Zweckmäßig weist die Filtereinrichtung abströmseitig hinter dem Gebläse ein Mundstück, eine Düse o.dgl. auf, aus der das flüssige Medium entgegen dem Luftstrom austreten kann, wobei zwischen der Auslaßöffnung des Gebläses und der Düse eine Prallfläche vorgesehen ist. An dieser wird das flüssige Medium nach außen umgeleitet und gleichzeitig fein zerstäubt.

Dazu trägt auch Anspruch 2 bei, wenn nämlich das zerstäubte flüssige Medium einen sich längs und quer zur Achse erstreckenden und/oder erweiternden Nebelstrom bildet. Dieser sorgt für einen intensiven Kontakt zwischen dem zerstäubten Medium und der zu reinigenden Umgebungsluft in einem relativ großen Volumen, wodurch stets ein hoher Reinigungsgrad gewährleistet ist.

Gemäß Anspruch 3 verläuft der Luftstrom zumindest abschnittsweise koaxial zur Achse, was die Prozeßführung weiter vereinfacht und eine äußerst schlanke Bauweise der Luft-Reinigungsvorrichtung ermöglicht, deren Achse laut Anspruch 4 bevorzugt eine Vertikalachse ist.

Konstruktiv ist es günstig, wenn das Gebläse nach Anspruch 5 ein Axiallüfter ist, dessen Gehäuse konzentrisch zur Achse eine Einlaßöffnung und eine Auslaßöffnung hat.

Gemäß Anspruch 6 ist die Ansaugöffnung stirnseitig in dem Außenrohr ausgebildet. Die zu reinigende Umgebungsluft kann somit ungehindert und großflächig in das Gebläse einströmen, ohne daß Strömungsleitbleche oder sonstige Umlenk-Maßnahmen erforderlich wären. Die Ausblasöffnung für die gereinigte Luft hingegen liegt nach Anspruch 7 seitlich in dem Außenrohr, so daß eine unmittelbare Vermengung mit der zu reinigenden Luft vermieden wird. Anspruch 8 verhindert das direkte Ausdringen von flüssigem Medium aus dem Gehäuse, indem die Überströmöffnung und die Ausblasöffnung horizontal und/oder vertikal versetzt zueinander angeordnet sind, insbesondere gegenüberliegend und/oder höhenversetzt.

Die Weiterbildung von Anspruch 9 sieht vor, daß das Gehäuse einen kreisrunden oder eckigen Querschnitt aufweist, während laut Anspruch 10 das Außenrohr und das Innenrohr des Gehäuses im unteren Bereich von einem gemeinsamen Boden verschlossen sind. Auch dies trägt zur kompakten und schlanken Bauweise der Vorrichtung bei sowie zu deren Stabilität.

Eine einfache Handhabung ergibt sich, wenn das Sammelbehältnis für das flüssige Medium nach Anspruch 11 vom unteren Bereich des Innenrohrs gebildet wird und dieser bzw. das Sammelbehältnis gemäß Anspruch 12 an einen gebäudeseitigen Abfluß anschließbar ist. Das verbrauchte flüssige Medium kann dabei mitsamt den ausgespülten Verunreinigungen direkt entsorgt werden.

Die Maßnahme von Anspruch 13 ermöglicht hingegen den Einsatz der Luft-Reinigungsvorrichtung auch an Orten, wo keine Abflußmöglichkeit vorhanden ist. Danach ist das Sammelbehältnis eine separate Wanne, die den unteren Bereich des Gehäuses umschließt. Im unteren Rand des Außenrohrs, im unteren Rand des Innenrohrs sowie im Boden der Gehäuserohre sind Durchströmöffnungen eingebracht, so daß das flüssige Medium ungehindert von dem Innenrohr aus in die Wanne strömen kann. Aufgrund der kompakten Abmessungen der Luft-Reinigungsvorrichtung ist hierbei keine spezielle Wanne mit besonderen Maßen erforderlich. Man kann vielmehr nahezu jede, gewöhnlich auf Baustellen vorhandene Wasserwanne verwenden.

Um eine optimale radiale und axiale Verteilung des flüssigen Mediums zu erreichen, sieht Anspruch 14 weiter vor, daß die Prallfläche glockenförmig ausgebildet ist.

In der Ausbildung von Anspruch 15 ist die Düse am Ende eines Steigrohrs angebracht, das bevorzugt koaxial zur Gehäuseachse angeordnet und laut Anspruch 16 an eine Druckleitung anschließbar ist.

Alternativ wird das Steigrohr in Einklang mit Anspruch 17 an eine Förderpumpe angeschlossen, die das flüssige Medium aus dem Sammelbehältnis fördert. Auf diese Weise kann das Medium in einem geschlossenen Kreislauf wiederverwendet werden, was sich weiter günstig auf die Betriebskosten auswirkt. Bevorzugt ist die Förderpumpe laut Anspruch 18 auf dem Boden des Gehäuses angebracht.

Anspruch 19 sieht vor, daß das flüssige Medium bevorzugt Wasser ist. Es können jedoch auch andere Flüssigkeiten verwendet werden, die geeignet sind Staub- und Schmutzpartikel aus einem Luftstrom auszuwaschen. Überdies können weitere Schadstoffe aus der Luft ausgefiltert werden.

Für eine optimale Handhabung und einen einfachen Transport der Luft-Reinigungsvorrichtung sieht Anspruch 20 vor, daß das Gehäuse seitlich mit wenigstens einem Handgriff versehen ist.

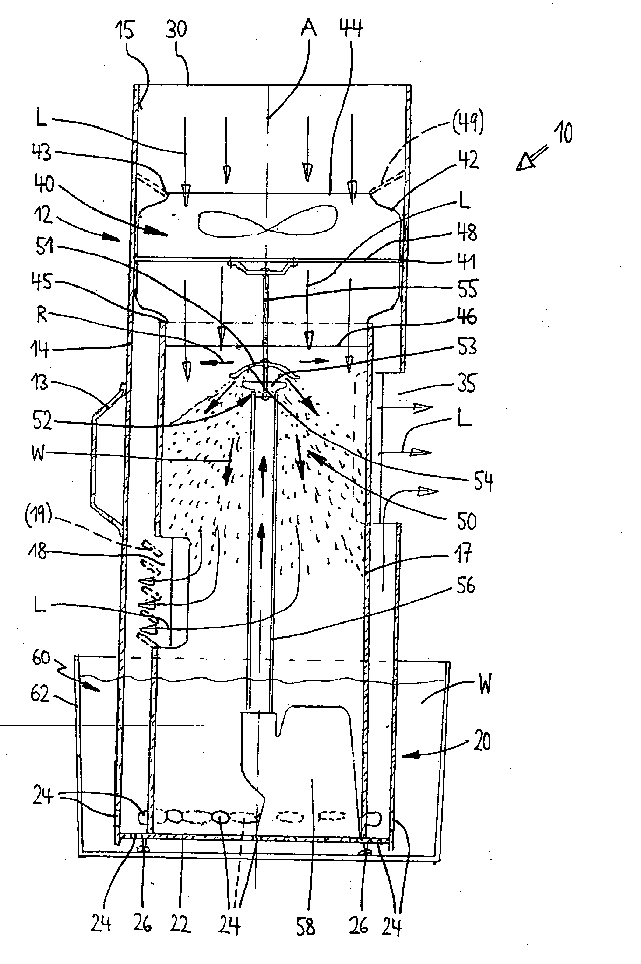

Weitere Merkmale, Einzelheiten und Vorteile der Erfindung ergeben sich aus dem Wortlaut der Ansprüche sowie aus der folgenden Beschreibung eines Ausführungsbeispiels anhand der **Zeichnung**. Deren einzige Figur zeigt eine Schnittansicht einer erfindungsgemäßen Luft-Reinigungsvorrichtung.

Die allgemein mit 10 bezeichnete Luft-Reinigungsvorrichtung dient dem Entfernen von Staub und Schmutz aus der (nicht näher dargestellten) Umgebungsluft. Sie hat ein insgesamt zylinderförmiges Gehäuse 12 mit einer stirnseitig über den gesamten Zylinderquerschnitt ausgebildeten Ansaugöffnung 30 und einer seitlichen Ausblasöffnung 35. Ein Gebläse 40 saugt die zu reinigende Umgebungsluft über die Ansaugöffnung 30 an und führt sie als Luftstrom L durch eine Filtereinrichtung 50 hindurch. Diese wäscht die Verunreinigungen mittels eines flüssigen Mediums W - vorzugsweise Wasser - aus dem Luftstrom L aus, der anschließend über die Ausblasöffnung 35 gereinigt in den Raum zurückgeführt wird. Das Wasser W, welches die Verunreinigungen nach unten abführt, wird in einem Sammelbehältnis 60 aufgefangen. Es kann nach Beendigung der Arbeiten zusammen mit den Verunreinigungen umweltgerecht entsorgt werden.

Das Gehäuse 12 wird von einem Außenrohr 14 und einem im Durchmesser kleineren Innenrohr 17 gebildet. Beide Gehäuseteile 14, 17 sind bevorzugt aus Edelstahl gefertigt und koaxial zu einer gemeinsamen Längsachse A angeordnet.

Das ebenfalls koaxial zur Längsachse A ausgebildete Gebläse 40 ist ein Axiallüfter, der von oben in das Außenrohr 14 eingesetzt wird. Er hat ein Gehäuse 42, das mit seiner Außennaht 41 dichtend am Innenumfang 15 des Außenrohrs 14 anliegt und vorzugsweise mit diesem verrastet, vernietet, verschraubt oder verschweißt ist. An seinem oberen Ende bildet das Gehäuse 42 einen Einlaßstutzen 43, der parallel zur Ansaugöffnung 30 eine Einlaßöffnung 44 aufweist. Das untere Ende des Gehäuses 42 weist einen Auslaßstutzen 45 auf, der abgedichtet in das Innenrohr 17 eingesetzt und fest mit diesem verbunden ist. Der Auslaßstutzen 45 begrenzt parallel zur Einlaßöffnung 44 eine Auslaßöffnung 46, mit der das Gebläse 40 über den gesamten Auslaßquerschnitt in dem Innenrohr 17 mündet. Ein (nicht dargestelltes) Gitter oder Lochblech über der Einlaßöffnung 44 verhindert, daß zu große Partikel oder Gegenstände in das Gebläse 40 gelangen. Bei Bedarf kann man auch ein grobes Vorfilter einsetzen.

Im unteren Bereich 20 des Gehäuses 12 sind das Außenrohr 14 und das Innenrohr 17 von einer gemeinsamen Bodenplatte 22 verschlossen. In kurzem Abstand darüber befinden sich sowohl im Außenrohr 14 als auch im Innenrohr 17 über den Umfang verteilt Durchströmöffnungen 24, damit das Wasser W aus dem Gehäuse 12 nach außen in das Sammelbehältnis 60 abfließen kann. Weitere Öffnungen 24 sind in der Bodenplatte 22 zwischen dem Außenrohr 14 und dem Innenrohr 17 eingebracht.

Etwa auf halber Höhe zwischen der Bodenplatte 22 und der Auslaßöffnung 46 ist seitlich in dem Innenrohr 17 eine Überströmöffnung 18 vorgesehen. Diese sorgt für eine Strömungsverbindung von dem Innenrohr 17 in das Außenrohr 14, welches seitlich mit der Ausblasöffnung 35 versehen ist. Damit das Wasser W der Filtereinrichtung 50 nicht aus dem Gehäuse 12 nach außen dringen kann, ist die Ausblasöffnung 35 gegenüberliegend und höhenversetzt zur Überströmöffnung 18 angeordnet. Beide Öffnungen 18, 35 können bei Bedarf zusätzlich mit schräg angestellten Lamellen 19 versehen sein, so daß von dem Luftstrom L mitgeführte Wassertropfen nach innen ablaufen können.

Die Filtereinrichtung 50 ist abströmseitig direkt hinter der Auslaßöffnung 46 des Axiallüfters 40 ausgebildet. Sie besteht im wesentlichen aus einem koaxial zur Längsachse A angeordneten Steigrohr 56, das von einer Förderpumpe 58 ausgeht und kurz vor der Auslaßöffnung 46 endet. Dort ist zentrisch zur Längsachse A eine nach oben offene trichterförmige Düse 52 aufgesetzt, über deren Öffnung 53 ein Prallkörper 51 montiert ist. Dieser weist eine der Düsenöffnung 53 zugewandte glockenförmige Prallfläche 54 auf und ist zentrisch zur Längsachse A an einer Gewindestange 55 montiert. Letztere wird unterhalb der Düse 52 am Steigrohr 56 sowie an einer im Gehäuse 42 des Gebläses 40 vorhandenen Querstange 48 festgelegt. Nicht näher bezeichnete Muttern ermöglichen eine Justierung der Prallfläche 54 gegenüber der Düse 52. Die Pumpe 58 ist auf dem Boden 22 des Gehäuses 12 befestigt und dort von weiteren Durchströmöffnungen 24 umgeben.

Das Sammelbehältnis 60 ist bevorzugt eine mit Wasser W befüllte runde Wanne 62, beispielsweise eine auf Baustellen üblicherweise vorhandene Kunststoffwanne. Deren Innendurchmesser ist so bemessen, daß die gesamte Vorrichtung 10 eingestellt werden kann. Zum Ausgleich von Bodenunebenheiten in der Wanne sind unter der Bodenplatte 22 Schraubfüße 26 befestigt, so daß man das Gehäuse 12 und damit den Axiallüfter 40 stets vertikal ausrichten kann; das Gehäuse 12 besitzt eine stets gute Standfestigkeit.

Vor der Inbetriebnahme der Vorrichtung 10 wird die Wanne 62 mit Wasser W gefüllt und das Gehäuse 12 einfach hineingestellt. Der Füllstand wird dabei so gewählt, daß sich der untere Bereich 20 des Gehäuses 12 über die Durchströmöffnungen 24 mit Wasser füllt und die Pumpe 58 während des Betriebes ständig von Wasser umgeben ist. Weitere Aufbauarbeiten sind nicht erforderlich. Die Vorrichtung ist sofort betriebsbereit.

Mit der Pumpe 58 wird das Wasser W aus dem Sammelbehältnis 60 unter hohem Druck über das Steigrohr 56 in die Düse 52 gefördert. Von dort aus trifft es gegen die glocken- oder pilzförmige Prallfläche 54, die das Wasser W zerstäubt und in Radialrichtung R sowie in Axialrichtung A nach unten in das Innenrohr 17 umlenkt.

Gleichzeitig saugt das Gebläse 40 die zu reinigende Umgebungsluft durch die Ansaugöffnung 30 hindurch an und leitet diese als Luftstrom L der Filtereinrichtung 50 zu. Die verunreinigte Luft wird mithin in das zerstäubte Wasser W hineingeblasen, so daß in der Luft enthaltene Staubpartikel befeuchtet und nach unten in die Wasserwanne W ausgespült werden. Die gereinigte Luft gelangt über die seitlichen Öffnungen 18, 35 in den Raum zurück.

Durch die Axialsymmetrische Ausbildung der Prallfläche 54 wird das Wasser W über die gesamte Querschnittsfläche des Innenrohrs 17 verteilt. Es entsteht ein sich nach unten erweiternder, kegelförmiger Nebelstrom, der den Luftstrom L intensiv durchdringt. Weil die Haupt-Strömungsrichtung des Nebelstroms mit der Strömungsrichtung des Luftstroms L zusammenfällt, wird der Wassernebel nicht auseinandergeblasen. Der Luftstrom L kommt mithin über seinen gesamten Querschnitt mit dem Wassernebel in Kontakt, so daß eine durchgehende Befeuchtung stattfindet. Die Luft wird intensiv gereinigt und sauber in den Raum abgegeben.

Durch den intensiven Wasserkontakt wird die Luft nicht nur gereinigt, sondern auch selbst befeuchtet, wodurch sich das Klima in der Umgebung der Reinigungsvorrichtung 10 verbessert. Der dort anfallende Staub wird von der Raumluft bereits vorab angefeuchtet, was nicht nur den Reinigungseffekt im Gerät verbessert, sondern auch neueren Umweltauflagen und Arbeitsschutzbestimmungen gerecht wird. Die Reinigungsvorrichtung 10 wirkt daher prinzipiell auch als Luftbefeuchter.

Ein weiterer wichtiger Vorteil der erfindungsgemäßen Reinigungsvorrichtung 10 liegt darin begründet, daß diese im wesentlichen axialsymmetrisch zur Längsachse A ausgebildet ist, was eine äußerst schlanke und kompakte Bauweise bei vergleichsweise geringem Gewicht ermöglicht. Die Doppelrohranordnung 14, 17 sorgt zusammen mit dem Gebläse-Gehäuse 42 und der Bodenplatte 22 für eine außerordentlich hohe Stabilität, die dem meist rauhen Baustellenalltag problemlos und dauerhaft standhält. Die gesamte Konstruktion ist einfach und kostengünstig zu realisieren. Gleichzeitig gewährleistet der abströmseitig hinter dem Gebläse erzeugte Wassernebel für eine hohe Reinigungswirkung, so daß die Arbeiten in der Umgebung der Vorrichtung 10 nahezu staubfrei ausgeübt werden können.

Überdies ist die Vorrichtung 10 stets einfach zu handhaben. Es sind keine aufwendigen Montage- oder Wartungsarbeiten erforderlich. Nach dem Betrieb wird die Vorrichtung 10 einfach nur mit Wasser abgespült. Sie läßt sich aufgrund des geringen Gewichts zudem rasch und bequem transportieren. Hierzu ist seitlich an der Außenwandung 14 ein Handgriff 13 angebracht, der zudem im Schwerpunkt der Vorrichtung 10 liegt. Rollen oder sonstige Transporthilfsmittel sind daher nicht erforderlich.

Die Erfindung ist nicht auf eine der vorbeschriebenen Ausführungsformen beschränkt, sondern in vielfältiger Weise abwandelbar. So kann das Gehäuse 12 ganz oder teilweise auch aus Aluminium oder Kunststoff gefertigt sein. Am Einlaßstutzen 43 des Lüfters 40 kann eine trichterförmige Manschette 49 angebracht sein, die verhindert, daß sich Staubreste zwischen dem Gehäuse 42 und dem Außenrohr 14 absetzen.

Auf den Einlaßstutzen 43 kann ein (nicht dargestelltes) flexibles Rohr oder ein Schlauch aufgesetzt werden - gegebenenfalls mit einem Adapter -, um in bestimmten Raumbereichen verunreinigte Luft gezielt absaugen zu können. Ebenso ist es möglich, auf die Ausblasöffnung 35 einen Schlauch oder ein Rohr aufzusetzen, so daß die gereinigte Luft in einen anderen Bereich oder aus dem Arbeitsraum abgeführt werden kann. Denkbar ist ferner, die Ausblasöffnung 35 und/oder die Überströmöffnung 18 über den Umfang der Rohre 14, 17 zu verteilen, beispielsweise in Form von kleineren Öffnungen oder Schlitzen. Hierdurch lassen sich beispielsweise günstige Strömungsverhältnisse in der unmittelbaren Umgebung der Vorrichtung 10 erzielen.

Die Düse 52 kann mit dem Prallkörper 51 und/oder dem Steigrohr 56 einstückig sein. Denkbar ist auch, anstelle einer trichterförmigen Düse 52 mit einer Prallfläche 54 einen Düsenkörper zu verwenden, der das Wasser direkt als Nebel zerstäubt in den Luftstrom L einbringt. Den Düsenkörper oder die Düse kann man dabei rotierend ausbilden, so daß eine zusätzliche Verwirbelung des flüssigen Mediums W stattfindet. Dieses kann auch radial nach innen aus einer Ringdüse oder aus einer koaxial zur Längsachse A angeordneten Ringleitung austreten, so daß sich ein nach innen verjüngender Strömungstrichter entsteht. Wichtig ist, daß ein Eindringen des Mediums W in das Gebläse 40 verhindert wird und daß sich das Medium W radial über die Querschnittsfläche des Innenrohrs 17 verteilt zumindest abschnittsweise in Richtung des Luftstroms L bewegt.

Eine weitere Ausführungsform kann vorsehen, daß der untere Bereich 20 des Gehäuses 12 wasserdicht ausgeführt und über einen (nicht gezeigten) Abflußstutzen an einen gebäudeseitigen Abfluß anschließbar ist. Das in dem Innenrohr 17 herabströmende Wasser W kann dadurch mitsamt den Verunreinigungen unmittelbar entsorgt werden. Eine separate Wasserwanne 62 ist dann nicht mehr erforderlich. Gleichzeitig oder alternativ kann die Pumpe 58 durch einen externen Druckwasseranschluß ersetzt werden, was den Aufbau noch weiter vereinfacht.

Man erkennt, daß eine Luft-Reinigungsvorrichtung 10 als Saugvorrichtung ausgebildet ist. Diese besteht aus zwei koaxial angeordneten Metallrohren 14, 17, nämlich einem Außenrohr und einem Innenrohr, die in einer mit Wasser W gefüllten Wanne 62 stehen. Auf dem Innenrohr 17 ist ein Lüfter (Sauggebläse 60) aufgesetzt, der umfangseitig dicht mit dem Außenrohr 14 abschließt. Im unteren Bereich der Rohre 4, 17 befindet sich eine Wasserpumpe 58 mit einem Steigrohr 56. Dieses sitzt zentrisch im Innenrohr 17 und endet kurz vor der Auslaßöffnung 46 des Lüfters 40. Dort ist ein pilzförmiger Aufsatz 51 vorgesehen, der das von der Pumpe 58 geförderte Wasser W nach außen und unten umlenkt. Seitliche Öffnungen 18, 35 im Außen- und Innenrohr 14, 17 dienen zum Ausströmen der gereinigten Luft, wobei die Öffnungen 18, 35 einander gegenüberliegend und höhenversetzt angeordnet sind, damit weder Wasser noch Staub aus der Vorrichtung 10 austreten können.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: Längsachse
- L: Luftstrom
- R: Radialrichtung
- W: flüssiges Medium

- 10: Luft-Reinigungsvorrichtung
- 12: Gehäuse
- 13: Handgriff
- 14: Außenrohr
- 15: Innenumfang
- 17: Innenrohr
- 18: Überströmöffnung
- 19: Lamellen
- 20: unterer Bereich
- 22: Boden / Bodenplatte
- 24: Durchströmöffnungen
- 26: Schraubfüße

- 30: Ansaugöffnung
- 35: Ausblasöffnung

- 40: Gebläse
- 41: Außennaht
- 42: Gehäuse
- 43: Einlaßstutzen
- 44: Einlaßöffnung
- 45: Auslaßstutzen
- 46: Auslaßöffnung
- 48: Querstange
- 49: Manschette

- 50: Filtereinrichtung
- 51: Prallkörper
- 52: Düse
- 53: Düsenöffnung
- 54: Prallfläche
- 55: Gewindestange
- 56: Steigrohr
- 58: Förderpumpe

- 60: Sammelbehältnis
- 62: Wanne

## Patentansprüche

1. Luft-Reinigungsvorrichtung (10) zum Entfernen von Staub und Schmutz aus der Umgebungsluft, mit einem Gehäuse (12), das eine Ansaugöffnung (30) für die zu reinigende Umgebungsluft und eine Ausblasöffnung (35) für die gereinigte Luft aufweistmit einem Gebläse (40), zum Ansaugen der verunreinigten Umgebungsluft und zum Ausblasen der gereintgten Luft wobei zwischen der Ansaugöffnung (30) und der Ausblasöffnung (35) ein Luftstrom (L) entsteht, mit einer Filtereinrichtung (50) zum Auswaschen der Verunreinigungen aus der angesaugten Umgebungsluft mittels eines flüssigen Mediums (W) und mit einem Sammelbehältnis (60) für das flüssige Medium (W), wobei das Gehäuse (12) und das Gebläse (40) koaxial zu einer gemeinsamen Achse (A) angeordnet sind und wobei die Filtereinrichtung (50) abströmseitig hinter dem Gebläse (40) ausgebildet ist und das flüssige Medium (W) zerstäubt in den Luftstrom (L) derart einbringen kann, dass das zerstäubte Medium (w) über die Querschnittsfläche des Gehäuses (12) verteilt wird und die Hauptströmungsrichtung des zerstäubten flüssigen Mediums (W) mit der Strömungsrichtung des Luftstroms (L) zusammenfällt, wobei das Gehäuse (12) ein Außenrohr (14) und zu diesem beabstandet ein Innenrohr (17) aufweist, wobei Außenrohr (14) und Innenrohr (17) über eine seitliche Überströmöffnung (18) für der gereinigten Luftstrom verbunden sind, **dadurch gekennzeichnet, dass** das Gebläse mit seinem Gehäuse (42) dicht an den Innenumfang (15) des Außenrohres (14) anschließt und mit seiner Auslaßöffnung (46) stirnseitig in dem Innenrohr mündet, dass die Filtereinrichtung (50) koaxial zur Achse (A) ausgebildet ist, und dass die Filtereinrichtung (50) abströmseitig hinter dem Gebläse (40) ein Mundstück oder eine Düse (52) aufweist, aus der das flüssige Medium (W) entgegen dem Luftstrom (L) austreten kann, wobei zwischen der Auslassöffnung (46) des Gebläses (40) und der Düse (52) eine Prallfläche (54) zum zerstäuben und Umlenken des flüssigen Mediums, so dass die Hamptströmungsrichtung des Nebelstroms mit der strömungsrichtung des Luftstroms (L) zusammenfällt, vorgesehen ist

2. Luft-Reinigungsvorrichtung nach Anspruch 1, **dadurch gekennzeichnet, daß** das zerstäubte flüssige Medium (W) einen sich längs und quer zur Achse (A) erstreckenden und/oder erweiternden Nebelstrom bildet.

3. Luft-Reinigungsvorrichtung nach einem der Ansprüche 1 oder 2, **dadurch gekennzeichnet, daß** der Luftstrom (L) zumindest abschnittsweise koaxial zur Achse (A) geführt ist.

4. Luft-Reinigungsvorrichtung nach einem der Ansprüche 1 bis 3, **dadurch gekennzeichnet, daß** die Achse (A) eine Vertikalachse ist.

5. Luft-Reinigungsvorrichtung nach einem der Ansprüche 1 bis 4, **dadurch gekennzeichnet, daß** das Gebläse (40) ein Axiallüfter ist, dessen Gehäuse (42) konzentrisch zur Achse (A) eine Einlaßöffnung (44) und eine Auslaßöffnung (46) hat.

6. Luft-Reinigungsvorrichtung nach einem der Ansprüche 1 bis 5, **dadurch gekennzeichnet, daß** die Ansaugöffnung (30) für die zu reinigende Umgebungsluft stirnseitig in dem Außenrohr (14) ausgebildet ist.

7. Luft-Reinigungsvorrichtung nach einem der Ansprüche 1 bis 6, **dadurch gekennzeichnet, daß** die Ausblasöffnung (35) für die gereinigte Luft seitlich in dem Außenrohr (14) ausgebildet ist.

8. Luft-Reinigungsvorrichtung nach einem der Ansprüche 1 bis 7, **dadurch gekennzeichnet, daß** die Überströmöffnung (18) und die Ausblasöffnung (35) horizontal und/oder vertikal versetzt zueinander angeordnet sind.

9. Luft-Reinigungsvorrichtung nach einem der Ansprüche 1 bis 8, **dadurch gekennzeichnet, daß** das Gehäuse (12) einen kreisrunden oder eckigen Querschnitt aufweist.

10. Luft-Reinigungsvorrichtung nach einem der Ansprüche 1 bis 9, **dadurch gekennzeichnet, daß** das Außenrohr (14) und das Innenrohr (17) des Gehäuses (12) im unteren Bereich (20) von einem gemeinsamen Boden (22) verschlossen sind.

11. Luft-Reinigungsvorrichtung nach einem der Ansprüche 1 bis 10, **dadurch gekennzeichnet, daß** das Sammelbehältnis (60) für das flüssige Medium (W) vom unteren Bereich (20) des Innenrohrs (17) gebildet ist.

12. Luft-Reinigungsvorrichtung nach Anspruch 11, **dadurch gekennzeichnet, daß** das Sammelbehältnis (60) an einen gebäudeseitigen Abfluß anschließbar ist.

13. Luft-Reinigungsvorrichtung nach einem der Ansprüche 1 bis 10, **dadurch gekennzeichnet, daß** das Sammelbehältnis (60) eine separate Wanne (62) ist, die den unteren Bereich (20) des Gehäuses (12) umschließt, und daß im unteren Rand des Außenrohrs (14), im unteren Rand des Innenrohrs (17) sowie im Boden (22) Durchströmöffnungen (24) für das flüssige Medium (W) eingebracht sind.

14. Luft-Reinigungsvorrichtung nach einem der Ansprüche 1 bis 13, **dadurch gekennzeichnet, daß** die Prallfläche (54) glockenförmig ausgebildet ist.

15. Luft-Reinigungsvorrichtung nach einem der Ansprüche 1 bis 14, **dadurch gekennzeichnet, daß** die Düse (52) am Ende eines Steigrohrs (56) angebracht ist, das koaxial zur Achse (A) angeordnet ist.

16. Luft-Reinigungsvorrichtung nach Anspruch 15, **dadurch gekennzeichnet, daß** das Steigrohr (56) an eine Druckleitung anschließbar ist.

17. Luft-Reinigungsvorrichtung nach Anspruch 15, **dadurch gekennzeichnet, daß** das Steigrohr (56) an eine Förderpumpe (58) angeschlossen ist, die das flüssige Medium (W) aus dem Sammelbehältnis (60) fördert.

18. Luft-Reinigungsvorrichtung nach Anspruch 17, **dadurch gekennzeichnet, daß** die Förderpumpe (58) auf dem Boden (22) des Gehäuses (12) angebracht ist.

19. Luft-Reinigungsvorrichtung nach einem der Ansprüche 1 bis 18, **dadurch gekennzeichnet, daß** das flüssige Medium (W) Wasser ist.

20. Luft-Reinigungsvorrichtung nach einem der Ansprüche 1 bis 19, **dadurch gekennzeichnet, daß** das Gehäuse (12) seitlich mit wenigstens einem Handgriff (13) versehen ist.

## Claims

1. An air cleaning device (10) for removing dust and dirt from the ambient air, comprising a housing (12) which has an intake opening (30) for the ambient air to be cleaned, and an exhaust opening (35) for the cleaned air, comprising a blower (40) for drawing in the contaminated ambient air and blowing out the cleaned air, wherein an air stream (L) forms between the intake opening (30) and the exhaust opening (35), comprising a filter device (50) for washing impurities out of the drawn-in ambient air using a liquid medium (W), and comprising a storage container (60) for the liquid medium (W), wherein the housing (12) and the blower (40) are disposed coaxial to a common axis (A), and wherein the filter device (50) is formed behind the blower (40) on the outflow side and can introduced the liquid medium (W) in an atomized manner into the air stream (L) such that the atomized medium (W) is distributed over the cross-sectional area of the housing (12) and the main direction of flow of the atomized liquid medium (W) coincides with the direction of flow of the air stream (L), wherein the housing (12) comprises an outer tube (14) and, separated therefrom, an inner tube (17), wherein the outer tube (14) and inner tube (17) are connected via a lateral overflow opening (18) for the cleaned air stream,
**characterized in that** the blower, via housing (42) thereof, tightly abuts the inner circumference (15) of the outer tube (14) and leads via the exhaust opening (46) thereof into the inner tube on the end-face side, the filter device (50) is designed coaxial to the axis (A), and the filter device (50) comprises, on the outflow side behind the blower (40), a mouthpiece or a nozzle (52), out of which the liquid medium (W) can emerge against the air stream (L), wherein a rebounding surface (54) for atomizing and redirecting the liquid medium is provided between the exhaust opening (46) of the blower (40) and the nozzle (52), and therefore the main direction of flow of the mist stream coincides with the direction of flow of the air stream (L).

2. The air cleaning device according to claim 1, **characterized in that** the atomized liquid medium (W) forms a mist stream that extends and/or expands along and transverse to the axis (A).

3. The air cleaning device according to one of the claims 1 or 2, **characterized in that** the air stream (L) is guided coaxially to the axis (A), at least in sections.

4. The air cleaning device according to one of the claims 1 to 3, **characterized in that** the axis (A) is a vertical axis.

5. The air cleaning device according to one of the claims 1 to 4, **characterized in that** the blower (40) is an axial blower, the housing (42) of which has an intake opening (44) and an outlet opening (46) concentric to the axis (A).

6. The air cleaning device according to one of the claims 1 to 5, **characterized in that** the intake opening (30) for the ambient air to be cleaned is formed in the outer tube (14) on the end-face side.

7. The air cleaning device according to one of the claims 1 to 6, **characterized in that** the exhaust opening (35) for the cleaned air to be cleaned is formed in the outer tube (14) on the side.

8. The air cleaning device according to one of the claims 1 to 7, **characterized in that** the overflow opening (18) and the exhaust opening (35) are disposed such that they are offset from each other horizontally and/or vertically.

9. The air cleaning device according to one of the claims 1 to 8, **characterized in that** the housing (12) has a circular or polygonal cross section.

10. The air cleaning device according to one of the claims 1 to 9, **characterized in that** the outer tube (14) and the inner tube (17) of the housing (12) are closed in the lower region (20) by a common base (22).

11. The air cleaning device according to one of the claims 1 to 10, **characterized in that** the storage container (60) for the liquid medium (W) is formed by the lower region (20) of the inner tube (17).

12. The air cleaning device according to claim 11, **characterized in that** the storage container (60) can be connected to a drain on the building side.

13. The air cleaning device according to one of the claims 1 to 10, **characterized in that** the storage container (60) is a separate tub (62) that encloses the lower region (20) of the housing (12), and flow-through openings (24) for the liquid medium (W) are formed in the lower edge of the outer tube (14), in the lower edge of the inner tube (17), and in the base (22).

14. The air cleaning device according to one of the claims 1 to 13, **characterized in that** the rebounding surface (54) is in the shape of a bell.

15. The air cleaning device according to one of the claims 1 to 14, **characterized in that** the nozzle (52) is attached to the end of a rising pipe (56) disposed coaxially to the axis (A).

16. The air cleaning device according to claim 15, **characterized in that** the rising pipe (56) can be connected to a pressure line.

17. The air cleaning device according to claim 15, **characterized in that** the rising pipe (56) is connected to a supply pump (58) which pumps the liquid medium (W) out of the storage container (60).

18. The air cleaning device according to claim 17, **characterized in that** the supply pump (58) is mounted on the base (22) of the housing (12).

19. The air cleaning device according to one of the claims 1 to 18, **characterized in that** the liquid medium (W) is water.

20. The air cleaning device according to one of the claims 1 to 19, **characterized in that** the housing (12) is provided with at least one handle (13) on the side.

## Revendications

1. Dispositif d'assainissement de l'air (10) pour l'élimination de la poussière et de la saleté dans l'air ambiant, avec un boîtier (12) comportant une ouverture d'aspiration (30) pour l'air ambiant à assainir, ainsi qu'une ouverture d'évacuation (35) pour l'air assaini, avec une soufflante (40) pour l'aspiration de l'air ambiant impur et pour l'évacuation de l'air assaini, où un flux d'air (L) est créé entre l'ouverture d'aspiration (30) et l'ouverture d'évacuation (35), avec un dispositif de filtration (50) pour le lavage des impuretés issues de l'air ambiant aspiré au moyen d'un milieu fluide (W), et avec un récipient de collecte (60) pour le milieu fluide (W), dans lequel le boîtier (12) et la soufflante (40) sont installés de façon coaxiale par rapport à un axe commun (A), et dans lequel le dispositif de filtration est installé côté évacuation derrière la soufflante (40) et permet d'introduire le milieu fluide (W) sous forme pulvérisée dans le flux d'air (L), de manière à ce que le milieu pulvérisé (W) soit réparti sur la surface de section transversale du boîtier (12) et à ce que la direction d'écoulement principale du milieu fluide pulvérisé (W) corresponde avec la direction d'écoulement du flux d'air (L), le boîtier (12) comportant un conduit extérieur (14) et un conduit intérieur (17) espacé de celui-ci, où le conduit extérieur (14) et le conduit intérieur (17) sont reliés par une ouverture de transmission latérale (18) pour le flux d'air assaini, **caractérisé en ce que** la soufflante est raccordée avec son boîtier (42) de façon étanche au pourtour intérieur (15) du conduit extérieur (14) et débouche avec son ouverture d'évacuation (46) côté frontal dans le conduit intérieur, **en ce que** le dispositif de filtration (50) est formé coaxialement à l'axe (A), et **en ce que** le dispositif de filtration (50) comporte un embout ou une buse (52) côté évacuation derrière la soufflante (40), par lequel/laquelle le milieu fluide (W) peut sortir dans le sens contraire du flux d'air (L), une surface d'impact (54) pour la pulvérisation et la déviation du milieu fluide étant prévue entre l'ouverture d'évacuation (46) de la soufflante (40) et la buse (52), de sorte que la direction d'écoulement principale du flux nébulisant correspond à la direction d'écoulement du flux d'air (L).

2. Dispositif d'assainissement de l'air selon la revendication 1, **caractérisé en ce que** le milieu fluide pulvérisé (W) forme un flux nébulisant qui s'étend et/ou s'élargit longitudinalement ou transversalement à l'axe (A).

3. Dispositif d'assainissement de l'air selon la revendication 1 ou 2, **caractérisé en ce que** le flux d'air (L) est guidé au moins par sections de façon coaxiale à l'axe (A).

4. Dispositif d'assainissement de l'air selon l'une des revendications 1 à 3, **caractérisé en ce que** l'axe (A) est un axe vertical.

5. Dispositif d'assainissement de l'air selon l'une des revendications 1 à 4, **caractérisé en ce que** la soufflante (40) est un ventilateur axial, dont le boîtier (42) possède une ouverture d'admission (44) et une ouverture d'évacuation (46) concentriquement à l'axe (A).

6. Dispositif d'assainissement de l'air selon l'une des revendications 1 à 5, **caractérisé en ce que** l'ouverture d'aspiration (30) pour l'air ambiant à assainir est formée côté frontal dans le conduit extérieur (14).

7. Dispositif d'assainissement de l'air selon l'une des revendications 1 à 6, **caractérisé en ce que** l'ouverture d'évacuation (35) pour l'air assaini est formée latéralement dans le conduit extérieur (14).

8. Dispositif d'assainissement de l'air selon l'une des revendications 1 à 7, **caractérisé en ce que** l'ouverture de transmission (18) et l'ouverture d'évacuation (35) sont disposées horizontalement et/ou verticalement en décalage l'une par rapport à l'autre.

9. Dispositif d'assainissement de l'air selon l'une des revendications 1 à 8, **caractérisé en ce que** le boîtier (12) présente une section transversale circulaire ou polygonale.

10. Dispositif d'assainissement de l'air selon l'une des revendications 1 à 9, **caractérisé en ce que** le conduit extérieur (14) et le conduit intérieur (17) du boîtier (12) sont fermées par un fond commun (22) dans la région inférieure (20).

11. Dispositif d'assainissement de l'air selon l'une des revendications 1 à 10, **caractérisé en ce que** le récipient de collecte (60) pour le milieu fluide (W) est formé par la région inférieure (20) du conduit intérieur (17).

12. Dispositif d'assainissement de l'air selon la revendication 11, **caractérisé en ce que** le récipient de collecte (60) peut être raccordé à une évacuation côté bâtiment.

13. Dispositif d'assainissement de l'air selon l'une des revendications 1 à 10, **caractérisé en ce que** le récipient de collecte (60) est un bac séparé (62) encerclant la région inférieure (20) du boîtier (12), et **en ce que** des ouvertures de passage (24) pour le milieu fluide (W) sont prévues dans le bord inférieur du conduit extérieur (14), dans le bord inférieur du conduit intérieur (17) ainsi que dans le fond (22).

14. Dispositif d'assainissement de l'air selon l'une des revendications 1 à 13, **caractérisé en ce que** la surface d'impact (54) est conçue en forme de cloche.

15. Dispositif d'assainissement de l'air selon l'une des revendications 1 à 14, **caractérisé en ce que** la buse (52) est installée à l'extrémité d'un conduit ascendant (56) coaxial à l'axe (A).

16. Dispositif d'assainissement de l'air selon la revendication 15, **caractérisé en ce que** le conduit ascendant (56) peut être raccordé à une conduite de refoulement.

17. Dispositif d'assainissement de l'air selon la revendication 15, **caractérisé en ce que** le conduit ascendant (56) est raccordé à une pompe d'alimentation (58) permettant de transporter le milieu fluide (W) hors du récipient de collecte (60).

18. Dispositif d'assainissement de l'air selon la revendication 17, **caractérisé en ce que** la pompe d'alimentation (58) est fixée au fond (22) du boîtier (12).

19. Dispositif d'assainissement de l'air selon l'une des revendications 1 à 18, **caractérisé en ce que** le milieu fluide (W) est de l'eau.

20. Dispositif d'assainissement de l'air selon l'une des revendications 1 à 19, **caractérisé en ce que** le boîtier (12) est pourvu d'au moins une poignée (13) sur le côté.
